Europäisches Patentamt

(19) European Patent Office

Office européen des brevets

(11) Numéro de publication: **0 170 536**
**A1**

(12) # DEMANDE DE BREVET EUROPEEN

(21) Numéro de dépôt: **85400932.1**

(22) Date de dépôt: **13.05.85**

(51) Int. Cl.⁴: **G 03 G 15/00**
**G 03 B 27/62**

(30) Priorité: **16.05.84 FR 8407569**

(43) Date de publication de la demande:
**05.02.86 Bulletin 86/6**

(84) Etats contractants désignés:
**AT BE CH DE GB IT LI LU NL SE**

(71) Demandeur: **MECILEC S.A.**
**91 bis, rue du Cherche-Midi**
**F-75006 Paris(FR)**

(72) Inventeur: **Berger, Jean-Claude**
**36 Avenue du 8 Mai**
**F-36100 Issoudun(FR)**

(74) Mandataire: **Hirsch, Marc-Roger**
**34 rue de Bassano**
**F-75008 Paris(FR)**

(54) **Dispositif passe revue pour copieurs a translation d'original.**

(57) Dispositif passe revue pour copieurs à translation d'original, caractérisé par le fait qu'il comprend un élément fixe calé sur la partie du copieur présentant l'ensemble de prise de vue, cet élément (3, 4) formant avec ladite partie du copieur, une surface plane et présentant une coulisse longitudinale (5) le long de laquelle coulisse une plaque transparente (7) destinée à porter l'original et embrayant avec les organes d'avancement du copieur.

EP 0 170 536 A1

Croydon Printing Company Ltd.

0170536

DISPOSITIF PASSE REVUE POUR COPIEURS A TRANSLATION D'ORIGINAL

La présente invention concerne un dispositif passe revue pour copieurs à translation d'original.

Il existe, en effet, nombre de machines de reprographie dont la partie supérieure est équipée pour faire passer des feuilles en translation devant une fenêtre d'éclairage et de prise de bue ligne par ligne, l'original étant saisi entre des paires de rouleaux d'entraînement qui assurent son avancement régulier. Ces dispositifs présentent le désavantage de ne pas accepter de feuilles assemblées par agrafage, collage, reliure ou autres, ce qui oblige à séparer les feuilles, et constitue un inconvénient grave lorsqu'on désire reproduire des revues ou livres. Dans ces dispositifs, les rouleaux supérieurs sont généralement démontables pour permettre l'entretien et, si besoin est, le dégagement d'un original qui serait en mauvaise position.

La présente invention s'applique tout particulièrement à ce type de copieurs et permet, à l'aide d'un élément additionnel que l'on pose sur le copieur, de passer avec sécurité des ensembles assemblés ou reliés.

La présente invention a pour objet un dispositif passe revue pour copieurs à translation d'original, comprenant un élément fixe calé sur la partie du copieur présentant l'ensemble de prise de vue, cet élément formant avec ladite partie du copieur, une surface plane et présentant une coulisse longitudinale le long de laquelle coulisse une plaque transparente destinée à porter l'original et embrayant avec les organes d'avancement du copieur.

Le dispositif conforme à la présente invention comprend essentiellement un élément fixe que l'on cale sur le plateau supérieur du copieur et qui présente une glissière longitudinale le long de laquelle peut coulisser une plaque transparente venant se déplacer devant l'ensemble d'éclairage et de prise de vue selon le mouvement à imposer à l'original, cette plaque étant entraînée en translation par les rouleaux d'entraînement normal de l'original ou tous autres moyens équivalents, ladite plaque étant, de plus, susceptible d'être relevée dans son mouvement de retour par exemple par rotation angulaire autour de la glissière.

Pour mieux faire comprendre les caractéristiques techniques et les avantages de la présente invention, on va en décrire un exemple de réalisation, étant bien entendu que celui-ci n'est pas limitatif quant à son mode de mise en oeuvre et aux applications qu'on peut en faire.

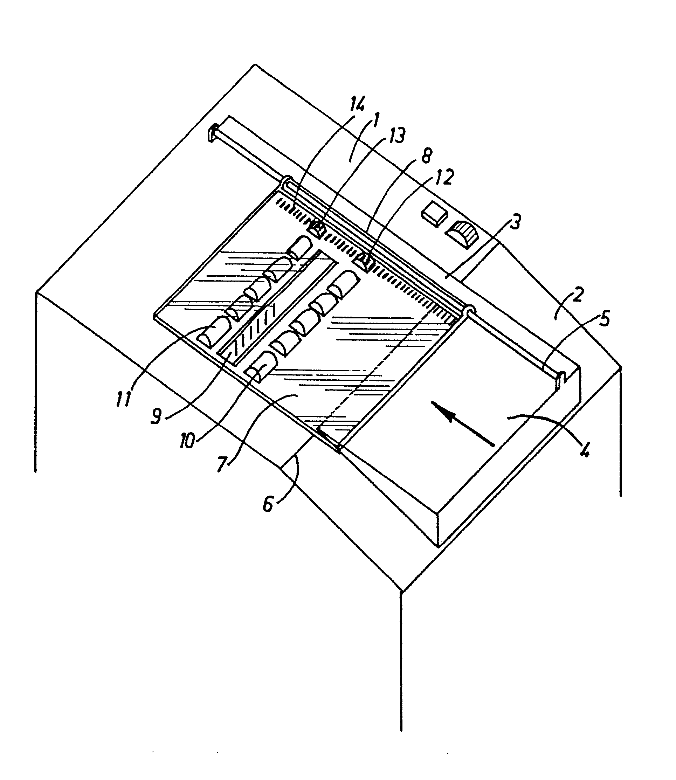

On se réfèrera à la figure unique qui représente schématiquement, en perspective, la partie supérieure d'un copieur équipée du dispositif conforme à l'invention.

Le plateau supérieur du copieur 1 est, ici, un plan horizontal prolongé, du côté amont du trajet des originaux illustré par la flèche, par une partie 2 en pente. Il est évident que l'invention peut s'adapter à toutes conformations, mais elle s'applique particulièrement bien à ce type de machine. Cela illustre le fait que, même si le plateau supérieur n'est pas plan, ce qui est parfaitement possible avec des originaux en feuilles volantes, il est important que le dispositif selon l'invention, associé au plateau de machine existant, forme un ensemble plan, ce qui est préférable pour le passage de revues peu souples et plus encore de livres.

Sur ce plateau brisé 1, 2, on place un élément, qui restera fixe, constitué, ici, par une plaque longitudinale 3 prolongée par une partie transversale 4 à profil triangulaire pour rattraper l'inclinaison de la partie 2. Le bord intérieur de la plaque 3 est muni d'une coulisse 5 qui peut être une nervure, une barre ou équivalent, de préférence à section ronde au moins en partie supérieure. Cet élément fixe peut être simplement posé, en particulier si les formes coopérantes du plateau du copieur et de l'élément présentent des moyens de calage tels que l'arête 6 ou d'autres moyens simples pouvant être prévus à cet effet (tétons et trous, nervures et rainures et équivalents).
Sur cet élément fixe, peut coulisser longitudinalement une plaque 7 transparente, par exemple en polymère de type dit "cristal" (polyesters, polystyrène, polycarbonates et équivalents). Cette plaque doit perturber le moins possible la prise de vue. Elle présente longitudinalement une gorge 8 ou autres moyens d'accrochage sur la coulisse 5 qui lui permet de se translater longitudinalement à plat pendant la prise de vue et d'être soulevée, de préférence, par rotation angulaire autour de la coulisse 5 après prise de vue pour revenir au point de départ; il est tout particuliérement intéressant que la coulisse 5 ait au moins en partie une section circulaire qui lui permette de coopérer avec une gorge 8 ou équivalente à section interne au moins en arc de cercle. Si cet arc est légérement supérieur à 180°, cela permet non seulement un maintien en place mais, éventuellement, un montage ou démontage par exemple pour le nettoyage de la plaque 7.

La plaque passe au-dessus de la plaquette 9 d'éclairage et de prise de vue, ligne par ligne, de l'original et sur les rouleaux d'entraînement. Une simple pression verticale peut assurer le mouvement grâce à ces rouleaux généralement en caoutchouc ou équivalent, mais il est préférable, pour éviter une irrégularité dans la translation, de disposer de roues dentées ou moletées telles que 12 et 13 pouvant d'ailleurs être coaxiales avec les rouleaux 10 et 11 et de même diamètre efficace et engrenant avec une crémaillère 14 ou des stries équivalentes dont est pourvue la face inférieure de la plaque 7.

On conçoit donc que partant de la droite de la figure, la plaque 7 entraînée par rouleaux 10 et 11 et/ou roues 12 et 13 se translate vers la gauche en faisant décrire toute sa surface par la plaquette d'éclairage et de prise de vue 9.

On peut prévoir sur la plaquette 7 des éléments de calage ou même de fixation des revues ou livres. Tous moyens adéquats peuvent être envisagés.

On notera également que l'on a intérêt, pour des raisons optiques, à ce que la plaque 7 soit d'épaisseur faible, ce qui peut être incompatible avec une bonne résistance mécanique surtout si l'on veut utiliser cette plaque avec des livres. On peut alors prévoir une plaque 7 à bords renforcés par exemple par surépaisseurs ou nervures, ce qui peut présenter l'avantage de caler les revues ou autres originaux.

En particulier, si l'on veut surtout passer des documents de format commercial que l'on ne souhaite pas dégrafer, on peut s'arranger pour que le cadre fermé par les nervures ou équivalents constituent au moins sur deux côtés le calage optimum pour le format considéré.

Il peut également être envisagé, pour des raisons optiques d'enlever la plaquette 9 du copieur lors des prises de vues avec la plaque 7 pour n'intercaler entre d'une part ensemble d'éclairage et de prise de vue, et d'autre part original, qu'une lame parallèle transparente équivalente (d'épaisseur égale et d'indice de réfraction égal par exemple).

**0170536**

## REVENDICATIONS

1.- Dispositif passe revue pour copieurs à translation d'original, caractérisé par le fait qu'il comprend un élément fixe calé sur la partie du copieur présentant l'ensemble de prise de vue, cet élément (3,4) formant avec ladite partie du copieur, une surface plane et présentant une coulisse longitudinale (5) le long de laquelle coulisse une plaque transparente (7) destinée à porter l'original et embrayant avec les organes d'avancement du copieur.

2.- Dispositif selon la revendication 1, caractérisé par le fait que la plaque (7) coopère avec les rouleaux d'entraînement du copieur.

3.- Dispositif selon l'une des revendications 1 ou 2, caractérisé par le fait que la plaque (7) présente une crémaillère (14) ou équivalent engrenant avec un système à engrenage ou équivalent du copieur.

4.- Dispositif selon l'une des revendications 1 à 3, caractérisé par le fait que la plaque (7) avance avec l'original au-dessus du dispositif de prise de vue et est soulevé angulairement autour de la coulisse pour le retour en position de départ.

**Office européen des brevets**

**RAPPORT DE RECHERCHE EUROPEENNE**

**0170536**
Numéro de la demande

EP 85 40 0932

## DOCUMENTS CONSIDERES COMME PERTINENTS

| Catégorie | Citation du document avec indication, en cas de besoin, des parties pertinentes | Revendication concernee | CLASSEMENT DE LA DEMANDE (Int Cl 4) |
|---|---|---|---|
| Y | FR-A-1 551 059 (LUMOPRINT ZINDLER KG) <br> * Page 1, colonne 2, lignes 5-25; page 5, colonne 1, lignes 17-36; page 5, colonne 2, lignes 3-9; figures 2,3 * | 1,2 | G 03 G 15/00 <br> G 03 B 27/62 |
| Y | US-A-3 588 244 (MURGAS et al.) <br> * Abrégé; colonne 1, lignes 60-74; figures 2,3 * | 1,2 | |
| A | FR-A-2 296 202 (Y. CORMIER) <br> * Page 2, ligne 19 - page 3, ligne 10 * | 1,2 | |
| A | DE-A-2 710 599 (OLYMPIA WERKE AG) <br> * Page 6, lignes 1-26; figure 1 * | 1,3 | |

DOMAINES TECHNIQUES RECHERCHES (Int. Cl.4)

G 03 G 15
G 03 B 27

Le présent rapport de recherche a été établi pour toutes les revendications

| Lieu de la recherche | Date d'achèvement de la recherche | Examinateur |
|---|---|---|
| LA HAYE | 23-08-1985 | CIGOJ P.M. |